# EUROPEAN PATENT SPECIFICATION

(11) **EP 1 788 755 B1**
(45) Date of publication and mention of the grant of the patent: **24.06.2009**
(21) Application number: 06124120.4
(22) Date of filing: 15.11.2006
(51) Int. Cl.: H04L 12/56

(54) **Method for cell processing and apparatus for cell processing using the same**
Verfahren zur Verarbeitung von Zellen und Vorrichtung zur Verarbeitung von Zellen unter Verwendung des gleichen Verfahrens
Procédé pour traitement de cellules et dispositif pour traitement de cellules utilisant ce procédé

(30) Priority: 16.11.2005 CN 200510101482
(43) Date of publication of application: 23.05.2007
(73) Proprietor: Huawei Technologies Co., Ltd., Longgang District, Shenzhen, Guangdong Province 518129 518129 Shenzhen (CN)
(72) Inventor: Tang, Dezhi Huawei Administration Bldg., Guangdong Prov. 518129 (CN)
(74) Representative: Pfenning, Meinig & Partner GbR

(56) References cited:
- DE-A- 4 432 061
- US-A- 5 481 536
- US-A1- 2004 141 510
- US-B1- 6 735 203

## Description

### Field of the Invention

The present invention relates to the communication field, and more particularly, to a method for cell processing and an apparatus for cell processing.

### Background of the Invention

The switch fabric is known as a core module in a router, which switches the packets or cells (data packet units inputted into the switch fabric) between a plurality of ports, that is, it switches the cells at an input port to a respective output port. The switch fabric generally includes two types, i.e. the Time Division Switching Fabric and the Space Division Switching Fabric.

Typically, the Time Division Switch Fabric may include a share buffer and share bus switch architecture, and is generally used in devices with small switching capacity due to its poor extensibility. A typical type of the Space Division Switch Fabric is a multi-stage switch fabric, such as CLOS architecture, Banyan architecture and Crossbar, etc.. It is frequently used in devices with large switching capacity because of its excellent extensibility.

It is a basic requirement of the switch fabric that the cells switched out still need to retain the previous order. In the multi-stage switch fabric, generally, one cell (or packet) can reach the object module through several paths, but the time delays of the several paths are highly impossible to be the same, which may thereby cause an out-of-order phenomenon when the cells of one stream (from the same input port to the same output port) reach the object module. Accordingly, there is generally a need to solve the problem of reordering in the multi-stage switch fabric.

Since the out of order for cells may generally occur in the second-stage of the switch fabric, it generally can be observed at the entrance of the last stage. A solution in the prior art for solving the problem of reordering includes, reordering the out-of-order cells first at the entrance of the last stage of the switch fabric and then sending them into the following logic for processing, including sending into a share buffer, enqueuing and scheduling, etc.. As a result, it is inevitable to set some cell buffers at the entrance of the last stage to store the out-of-order cells in advance and then to send them into a share buffer of the chip after the next desired cell arrives, for carrying out the follow-up switch processing.

The operation of reorder requires certain share buffer spaces known as the Reorder Cell Buffer (RCB), for storing the cells that have not been reordered. As the capacity of the switch fabric extends, the RCB capacity required by the solution described above increases rapidly. However, if the RCB capacity becomes too large, there will be a problem for its implementation.

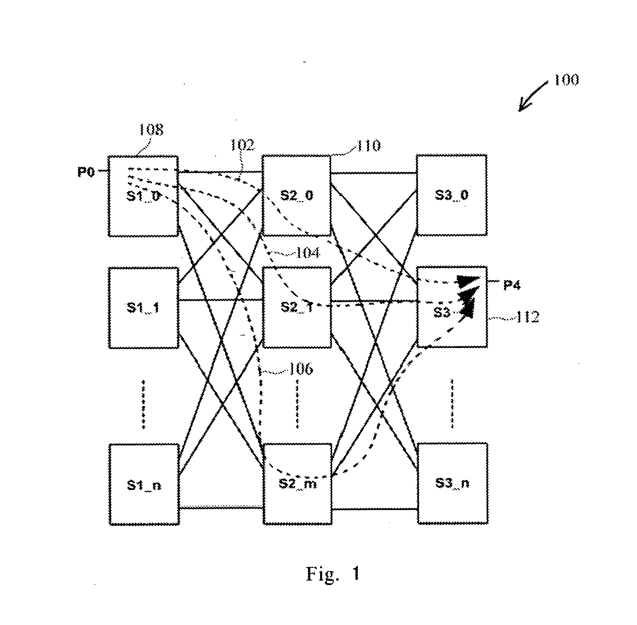

Fig. 1 shows the architecture of a three-stage switch fabric 100 in prior art. In this switch fabric, the cells input from any input module can reach any output module via m paths, which are exemplarily shown as three paths in the figure, i.e. path one 102, path two 104 and path three 106. Due to the different time delays of wiring in the m paths and the different processing time delays of the second-stage chip 110, when the cells switched out from the first-stage chip 108 and passing through different paths reach the third-stage chip 112, their order may not retain as before. Thereby, in such a switch fabric, it generally requires solving the problem before sending the cells out from the object module. Alternatively, the problem can be solved by another solution that reorders according to sequence flags, but the RCB used during the reorder increases rapidly along with the extension of capacity of the switch fabric, and thereby the cost will be too high.

Supposing there are 64 source modules (the first stage) in a switch fabric and supposing the number of the paths for the cells sent by a source module to an object module is 36, the maximum time delay between different paths is 4 cell periods, and the size of a cell is 72Byte, then the maximum buffer required will be 64 × {36 × 4-1} × 72 × 8 = 5Mbit, wherein 64 represents the number of the source modules, 36 represents the number of the paths, 72 represents the number of bytes occupied by each cell, and 8 represents one byte equals to 8 bit.

US-B1-6 735 20.3 (2004-05-11) discloses a switch arrangement used in a packet-switched telecommunications network, specially an ATM network.

US-A-5 481 536 (1996-01-02) discloses a method that allows information packets (cells) that belong to different connections and that generally do not have sequence numbers ordered.

US 2004/141510 A1 (2004-07-22) discloses a system for re-sequencing data packets.

DE 4432061A discloses a packet switching system comprising a plurality of inlet circuits which are used each for multiplying a cell coming in by an inlet line, which are provided for transmission via different switches and for producing a time stamp to be supplied with each cell.

### Summary of the Invention

An object of the present invention is to provide a method for cell reordering, which substantially obviates the problem in prior art that the cell reordering operation may occupy too much buffer space, and further to provide a method as well as an apparatus for cell processing.

The present invention provides a method for cell reordering, including the following steps: receiving cells of a stream from a source module, wherein each of the cells has a time flag and a sequence flag, the time flag is configured to show a time order of the cells in transmission, and the sequence flag is configured to show a space order when the time flags of some of the cells are same; and reordering multiple pieces of the enqueue information of the cells according to the time flag and the sequence flag of each of the cells; inserting time flags and sequence flags into cells and sending the cells from a source module to an object module by a sequence flag generating module; and reordering the multiple pieces of the enqueue information of the cells by a reordering module according to the time flags and the sequence flags, which are sent from the source module and received by the object module.

In the above method, the time flags of the cells outputted at the same slot are same, and the sequence flags of the cells outputted at the same slot are different.

In the above method, the time flags are arranged by a unified rule and the number of the time flags are at least twice of the number of cell period included in the maximum delay difference between two different paths; and the sequence flags are arranged by a unified rule, with the number thereof equal to the number of paths from the source module to an object module.

In the above method, the step of reordering the multiple pieces of the enqueue information of the cells according to the time flag and the sequence flag of each of the cells further includes: storing the cells successively by the arriving order of the cells at the object module and extracting the enqueue information of the cells; and sending the multiple pieces of the enqueue information by the arriving order of the cells at the object module to a reordering module for reordering.

In the above method, the step of sending the multiple pieces of the enqueue information by the arriving order of the cells at the object module to the reordering module for reordering further includes: allocating the multiple pieces of the enqueue information to a corresponding reordering buffer according to the serial number of the source module; starting to time the time flag in the case that a cell having a unique time flag, wherein when a timing value becomes equal to or more than the maximum time delay, determining whether all of the multiple pieces of the enqueue information of the cells in a time range prior to the time flag have been outputted, and if so, outputting the enqueue information of the cell having the time flag; if not, forcedly outputting the multiple pieces of the enqueue information of the cells which are not outputted till then, and outputting the enqueue information of the cell having the time flag; and performing the time-division multiplexing on the output of the reordering buffers by polling.

In the above method, the step of reordering the multiple pieces of the enqueue information of the cells according to the time flag and the sequence flag of each of the cells further includes: sending the multiple pieces of the reordered enqueue information to a queue management module for queuing.

In the above method, at step of starting to time the time flag in the case that a cell having a unique time flag, the time flag is timed by an aging counter.

The above method further includes a step of outputting the multiple pieces of the enqueue information reordered successively and scheduling the corresponding cells out from a share cell buffer module.

The above method further includes a step before the step of outputting the multiple pieces of the enqueue information reordered successively and scheduling the corresponding cells out from the share cell buffer module: queuing the reordered multiple pieces of the enqueue information into an output sequence.

In order to better realize the above object, the present invention provides an apparatus for cell processing, including: a reordering module, for receiving cells of a stream from a source module, wherein each of the cells has a time flag and a sequence flag, the time flag is configured to show a time order of the cells in transmission, and the sequence flag is configured to show a space order when the time flags of some of the cells are same; and for reordering multiple pieces of the enqueue information of the cells according to the time flag and the sequence flag of each of the cells.

The above apparatus further includes: an input processor module, for receiving cells from the first stage chip, storing the cells into a share cell buffer module and extracting the multiple pieces of the enqueue information of the cells, and outputting the multiple pieces of the enqueue information of the cells into the reordering module by the arriving order of the cells at a third stage chip; a share cell buffer module, for storing the cells received by the input processor module; and a queue manager, for receiving the multiple pieces of the enqueue information of the cells reordered by the reordering module, i.e., queuing the cells overcoming the out-of-order problem.

The reordering module further includes: a multipath allocator, for receiving the multiple pieces of the enqueue information of the cells from the input processor module and allocating the multiple pieces of the enqueue information to the corresponding reordering buffer according to the serial number of the source module; a plurality of reordering buffers, for reordering the multiple pieces of the enqueue information, each corresponding to one source module, and for a reordering buffer, in the case that a cell have a unique time flag, it starting to time the time flag, wherein when a timing value becomes equal to or more than the maximum time delay, the reordering buffer determines whether all of the multiple pieces of the enqueue information of the cells in a certain time range prior to that of the time flag have been outputted, and if so, outputs the enqueue information of the cell having the time flag; if not, enforces to output the multiple pieces of the enqueue information of the cells in the prior time range that have not been outputted, and outputs the enqueue information of the cell having the time flag; and a multiplexer, for performing the time-division multiplexing on the output of the reordering buffers by polling.

According to the present invention, the cells are inserted by the time flag and the sequence flag in the source module, the multiple pieces of the enqueue information for the cells is ordered in the object module according to the time flag and the sequence flag and then the cells are scheduled. Moreover, in the present invention, the time for each cell occupying RCB during reorder is strictly controlled, the reorder operation will be done after the occupied time reaches the limit defined in the algorithm, and the demand for RCB buffer capacity is lowered, whereby it solves the significant problem in extensibility design of the multi-stage switch fabric with large capacity.

### Brief Description of the Drawings

Fig. 1 shows the architecture of a typical three-stage switch fabric in prior art;
Fig. 2 is a block diagram showing an apparatus for cell processing according to an embodiment of the present invention;
Fig. 3 is a block diagram showing the internal architecture of a reordering module according to an embodiment of the present invention;
Fig. 4 is a flow chart showing a method for cell reordering according to an embodiment of the present invention;
Fig. 5 is a schematic diagram showing the structure of a reorder cell buffer according to a preferred embodiment of the present invention;
Fig. 6 is a schematic diagram showing that a source module sends cells and then the cells can reach an object module via four paths having different time delays according to a preferred embodiment of the present invention;
Fig. 7 is a schematic diagram showing a rule of cells reaching an object module according to a preferred embodiment of the present invention;
Fig. 8 is a schematic diagram showing a reorder process of the cells received by an object module according to a preferred embodiment of the present invention;
Fig. 9 is a flow chart showing a method for cell processing according to an embodiment of the present invention.

### Detailed Description of the Invention

According to an embodiment of the present invention, switched cells are numbered successively based on their previous order, i.e. inserting time flags and sequence flags. As a part of a cell header, the time flag and the sequence flag, together with the cell payload, are switched to an object module. In the object module, the cells are ordered. And the input processor module stores the incoming cells switched via different paths into a share cell buffer module of the chip successively in their arriving order, but without being enqueued. The multiple pieces of information required for enqueue are sent to the reordering module for ordering and then are sent to the queue management module successively to be queued so as to be outputted in sequence, that is, the reordering module only performs to buffer and to process the information in relation to enqueue.

The detailed embodiments of the present invention will be described with reference to the accompanying drawings, which however only serve as an interpretation to the invention but not as limitations.

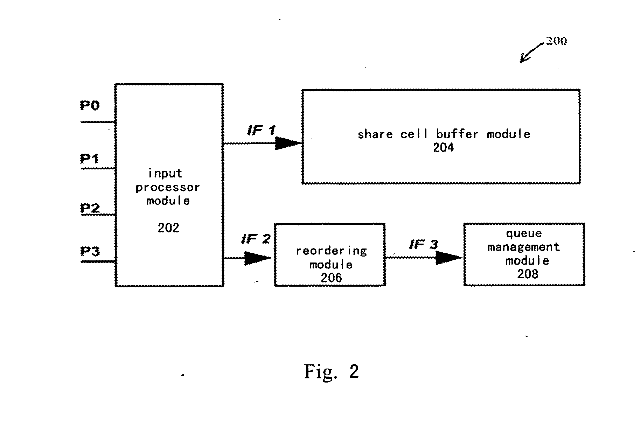

Fig. 2 is a block diagram showing a cell processing apparatus 200 according to an embodiment of the present invention. After the time flags and the sequence flags are inserted in the cells in the first stage chip, the cells are processed in the cell processing apparatus 200. Fig. 2 indicates the location of the reordering module 206 in the chip, wherein a share cell buffer module 204 serves as a share buffer for all the cells in the chip, and a queue management module 208 can queue the multiple pieces of the enqueue information of the cells. The cells scheduled according to the enqueue information are sent out of the switch fabric successively. In the embodiment, the incoming cells switched via different paths can be stored into the share cell buffer module 204 of the chip successively in their arriving order, but without enqueue. Meanwhile, the multiple pieces of the information required for enqueue (referred to as "multiple pieces of the enqueue information" for short) are sent to the reordering module 206 by the arriving order of the cells at the object module, and after they are ordered in the reordering module 206, the multiple pieces of the enqueue information are sent to the queue management module 208 to be queued, that is, the reordering module 206 only performs to buffer and to process the multiple pieces of the enqueue information. As a result, an advantage is that it is not necessary to buffer such cells that have not been ordered in the input processor module 202, thereby saving a large amount of resources.

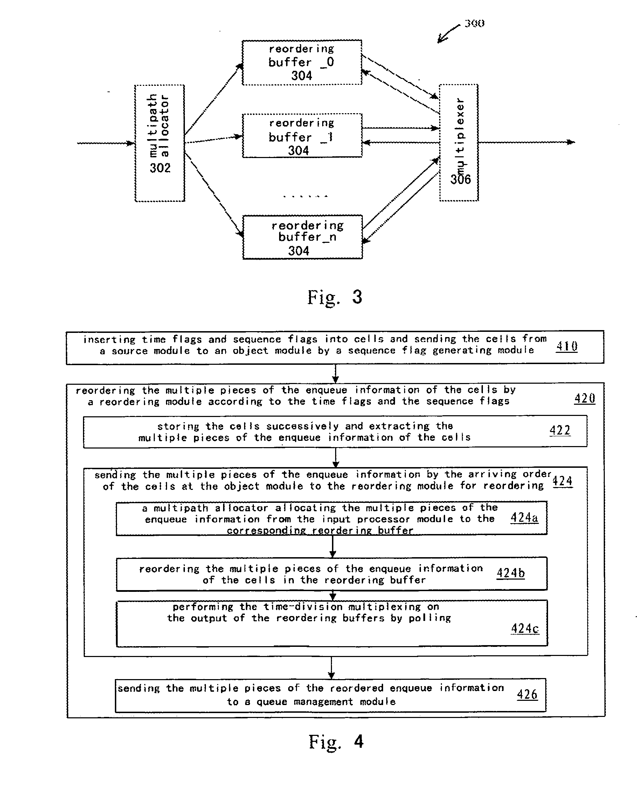

Fig. 3 is a block diagram showing the internal architecture of a reordering module 206 according to an embodiment of the present invention. The reordering module 206 includes a multipath allocator 302, for receiving the multiple pieces of the enqueue information of the cells from the input processor module and allocating the multiple pieces of the enqueue information to the corresponding reordering buffer 304 according to the number of the source module; a plurality of reordering buffers 304, each corresponding to a source module, for ordering the multiple pieces of the enqueue information corresponding to the cells of the source module; a multiplexer 306, for performing a time-division multiplexing processing the multiple pieces of the enqueue information outputted by the plurality of reordering buffers 304.

Each source module in the switch fabric has a corresponding reordering buffer 304 located in the object module. The reordering buffer 304 buffers the multiple pieces of the enqueue information, other than cells. The multiple pieces of the enqueue information may include information such as an address in the share buffer of a cell and the cell priority. The multiple pieces of the enqueue information from the input processor module is allocated by the multipath allocator 302 to the corresponding reordering buffer 304 according to the source module number and is ordered in the corresponding reordering buffer. It should be noted that it is only necessary to reorder the cells from the same source module, but not from the different ones.

For each reordering buffer, in the case that a cell having a certain time flag is the unique one having such a flag, the reordering buffer will start to time the time flag, and when the timing value becomes equal to or larger than the maximum time delay, the reordering buffer determines whether all of the multiple pieces of the enqueue information of the cells in a certain time range prior to that of the time flag have been outputted, and if so, outputs the multiple pieces of the enqueue information of the cell having the time flag; if not, enforces to output the multiple pieces of the enqueue information of the cells in the prior time range that have not been outputted, and then outputs the multiple pieces of the enqueue information of the cell having the time flag. The reordering buffer is configured with an aging counter for timing each of the unique time flag.

A plurality of streams may co-exist (the stream is defined to include all the cells from a source module to an object module) in the system, and therefore each object module may have a plurality of reordering buffers 304. As a result, it is highly possible that several reordering buffers 304 accomplish reordering at the same time and output the multiple pieces of the enqueue information reordered. Thereby, at the output port of the plurality of reordering buffers 304 it is necessary to perform the time-division multiplexing processing, which is accomplished by the multiplexer 306. The multiplexer 306 can arbitrate the request from each reordering buffer 304 and determine which reordering buffer 304 can output multiple pieces of the enqueue information by polling.

Fig. 4 is a flow chart showing a method for cell reordering according to an embodiment of the present invention. The method includes the following steps:

At step 410, inserts the time flag and the sequence flag into a cell by the sequence flag generating module, and sends the cell from the source module to the object module.

At step 420, the reordering module reorders multiple pieces of the enqueue information of the cells according to the time flag and the sequence flag of the cells received by the object module from the source module.

Herein, the time flag (tf) is used to solve the out-of-order problem in time, i.e. sending earlier but arriving later or sending later but arriving earlier. If the cells of the same stream are outputted at the same time, the same time flag should be inserted into those cells. The maximum of the time flag is determined by the maximum difference of path delays. The sequence flag (sf) is used to solve the out-of-order problem in space. If the cells of the same stream are outputted at the same time, they must have different sequences and thus different sequence flags should be inserted into them. The time flags are arranged by a unified rule and the number thereof is at least twice of the number of cell period included in the maximum delay difference between two different paths. And, the sequence flags are arranged by a unified rule, with their number equal to the number of the paths from one source module to one object module.

Both the time flag and the sequence flag are inserted into the cell header by the sequence flag generating module and are switched to the object module together with the cell payload. Preferably, the time flag of each stream may be added by 1 every time a cell slot passes. The time flag may be returned to zero and counts again after reaching the maximum. The bits required by the time flag and the sequence flag are determined by: the maximum of the differences between the path delays SKEWmax as to cells reaching the object module via different paths, and the number of the paths PATH_NUM from one input port to one output port. The value range of the time flags can be defined within 0 ~ (SKEWmax × 2-1), while the value range of the sequence flags can be defined within 0 ~ (PATH_NUM-1). Assuming the PATH_NUM is equal to 4, and the SKEWmax is equal to two cell periods, and then 2 bits for the time flags and 2 bits for the sequence flags are required. The arranging rule of the time flags and the sequence flags may change with the agreement between the source module and the object module.

The reordering module can reorder the multiple pieces of the enqueue information of the cells according to the time flag and the sequence flag, and this may include the following steps:

At step 422, the input processor module stores the cells successively into the share cell buffer module by the arriving order of the cells at the object module, and extracts the enqueue information of the cells.

At step 424, the input processor module sends the multiple pieces of the enqueue information to be reordered to the reordering module by the arriving order of the cells at the object module.

At step 426, the multiple pieces of the reordered enqueue information are sent to a queue management module to be queued.

Herein, step 424 may further include the following steps.

At step 424a, the multipath allocator allocates the multiple pieces of the enqueue information from the input processor module to a corresponding reordering buffer in accordance with the number of the source module.

At step 424b, for each reordering buffer, in the case that one cell having a certain time flag is the unique one having such a flag, the reordering buffer starts to time the time flag, and when the timing value becomes equal to or larger than the maximum time delay, the reordering buffer determines whether all of the multiple pieces of the enqueue information of the cells in a certain time range prior to the " time flag" have been outputted, and if so, outputs the multiple pieces of the enqueue information of the cell having the time flag; if not, firstly, enforces output of the multiple pieces of the enqueue information of the cells in the prior time range that has not been outputted, and then outputs the multiple pieces of the enqueue information of the cell having the time flag.

The reordering buffer times the multiple pieces of the enqueue information by using the aging counter. In the case that one cell having a certain time flag is the unique one having such a flag, the aging counter sets the aging enabling Time_start to 1, and begins timing. If the aging time Time counted by the aging counter is equal to or more than a threshold Tth of the aging time, the aging counter sets the aging expiration Time_over to be 1, and determines whether all of the multiple pieces of the enqueue information of the cells in a certain time range prior to the time flag have been outputted, and if so, outputs the multiple pieces of the enqueue information of the cell having the time flag; if not, firstly, enforces output of the multiple pieces of the enqueue information of the cells in the prior time range that has not been outputted, and then outputs the multiple pieces of the enqueue information of the cell having the time flag.

At step 424c, the multiplexer performs the time-division multiplexing on the output of the reordering buffers by polling.

Herein, the aging time Time is a time in which the cells are waiting in the RCB for completing the reorder; Time [0] represents the time in which the cell having a time flag of 0 stays in the RCB; ...; and Time [N] represents the time in which the cell having a time flag of N stays in the RCB. When several cells having the time flag of 0 stay in the RCB, Time [0] may represent the staying time of an "earliest-arriving cell" among these cells.

The aging enabling Time_start is defined so that if a cell having a certain time flag detects it is the single one having such a flag when reaching the object module, it starts to be timed, that is, Time_start [ts] is set to 1 and at the same time Time [ts] begins timing.

The aging expiration Time_over is defined so that if the multiple pieces of the enqueue information of all the cells having a certain time flag have been reordered, such cells (or the multiple pieces of the enqueue information of such cells) can be referred to as being in a state of aging expiration. If the cells having the time flag of 0 are in the state of aging expiration, Time_over [0] is set to 1, ..., and if the cells having the time flag of N are in the state of aging expiration, Time_over [N] is set to 1. As it will be described bellow, both "natural aging" and "compulsory aging" can bring the cell into the state of aging expiration.

The threshold Tth of the aging time means that once the aging time is equal to or more than the threshold Tth of the aging time, Time_over will be set to 1, representing the state of aging expiration. The value of Tth is determined only by the maximum difference n between different path delays, that is, Tth = n.

The natural aging means that when the aging time is equal to or more than the threshold Tth of the aging time, it leads to the state of aging expiration, and this process is referred to as the natural aging.

The compulsory aging means that in the state of aging expiration, in addition to setting the Time_over value of the cells having the aging time equal to or more than the threshold Tth to 1, the Time_over of some other cells having time flags earlier in a predetermined range (the cells that are not in the state of aging expiration, but yet cannot be reordered correctly by the natural aging in the object module due to different transmission paths and delays of the cells) is forced to be set to 1, and this process is referred to as the compulsory aging.

The aging scheduling output means that because it is highly possible for the multiple pieces of the enqueue information of the cells having different time flags to come into the state of aging expiration at the same time, it is necessary to select the multiple pieces of the enqueue information of a group of the cells in the state of aging expiration and to output them from the reordering buffer and to schedule the respective cells out from the cell buffer to release the relating memory spaces, and this process is referred to as the aging scheduling output.

The method adopted here for scheduling output will be exemplarily described. In the case that there are N (N is even) time flags, the states of the N time flags are designated by a N-digit sequence, wherein the initial digit and the last digit of the N-digit sequence is regarded as the neighboring digits, and 1 represents the timing value of a time flag is equal to or more the the time delay , while 0 represents the timing value of a time flag is less than the time delay. Find the continuous N/2 digits with the neighboring digits being 0 in the N-digit state sequence, and then determine whether the first digit after the continuous N/2 digits is 1. If the first digit is 1, output the multiple pieces of the enqueue information of the cells having the time flag corresponding to the first digit; and if it is 0, continue to determine whether the next digit is 1 and until find a state digit being 1, output the multiple pieces of the enqueue information of the cells having the time flag corresponding to the found digit. In other cases, report an error of reorder, and select a cell having a timing value of the time flag equal to or larger than the time delay and output the multiple pieces of the enqueue information thereof.

If the maximum difference between different path delays is 4, the value range of the time flags will be then 0 to 7, and the method for aging scheduling output can be described as shown in the following table.

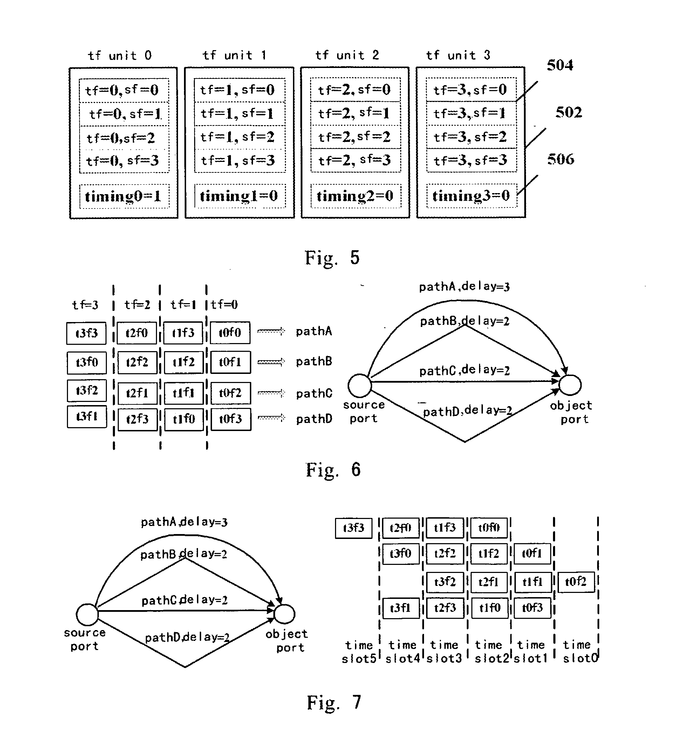

Fig. 5 is a schematic diagram showing the structure of a reorder cell buffer according to a preferred embodiment of the present invention. Assuming the PATH_NUM is 4 and the SKEWmax is 2 cell periods, and then 2 bits for the time flags (tf) and 2 bits for the sequence flags (sf) are required. Each reordering buffer

| { time_over[0] ,time_over[1] , ... ,time_over[7]} 1 represents the aging expiration, x can be 1 or 0 | aging scheduling output |
|---|---|
| 1xxx0000 | ts0 |
| 01xxx000 | ts1 |
| 001xxx00 | ts2 |
| 0001xxx0 | ts3 |
| 00001xxx | ts4 |
| x00001xx | ts5 |
| xx00001x | ts6 |
| xxx00001 | ts7 |
| Others | report an error of reorder, and select an output for aging expiration. |

includes 4 serial number units (tf unit) 502 for the time flag, and each serial number unit 502 for the time flag includes 4 reorder units 504 and 1 timing unit 506. The reorder unit 504 buffers the multiple pieces of the enqueue information of one cell, such as an address of a cell in the share buffer and the cell priority. The time flag corresponding to the multiple pieces of the enqueue information of each cell determines to occupy which tf unit 502 and the sequence flag carried by the cell determines to occupy which reorder unit 504 in the tf unit 502.

The timing unit 506 is a timing ager. For the tf unit 502, if 4 reorder units 504 are not occupied at all, the corresponding timing unit 506 will be then set to zero. If any of the 4 reorder units 504 is occupied (or effective), the corresponding timing unit 506 will begin to count, and add 1 to each cell slot. If the timing unit 506 is equal to the maximum Tth (herein, Tth = 2), it means the corresponding tf unit 502 has been reordered, and the corresponding effective reorder unit should be read, and then the timing unit 506 should be set to zero.

Fig. 6 is schematic diagram showing the source module sending cells to the object module via four paths having different time delays according to a preferred embodiment of the present invention, in which the cell having the time flag of 0 (tf=0) and the sequence flag of 0 (sf=0) is referred to as t0f0 for short, other cells will be referred to in short similarly. Fig. 6 shows a single stream (i.e., only one source module and one object module in the system) as an example, illustrating the time flag and the sequence flag of each cell and their paths in the case that the source module sends 16 cells. Herein, the number of the path PATH_NUM is 4 and the maximum of the differences between the path delays SKEWmax is 2 cell periods.

Fig. 7 schematically shows a rule for cells reaching the object module according to the preferred embodiment of the present invention, which is an example in relation to the single stream (i.e., only one source module and one object module in the system) in Fig. 6. It can be seen, while each cell waits for 3 cell slots at most after reaching the object module, the group of cells having the same time flag will all arrive. At the same time, the reorder for the group of cells having the time flag is finished. All the reorder units read from the reordered tf units are in the small-to-big turn of the sequence flags, and then the timing unit is set to zero.

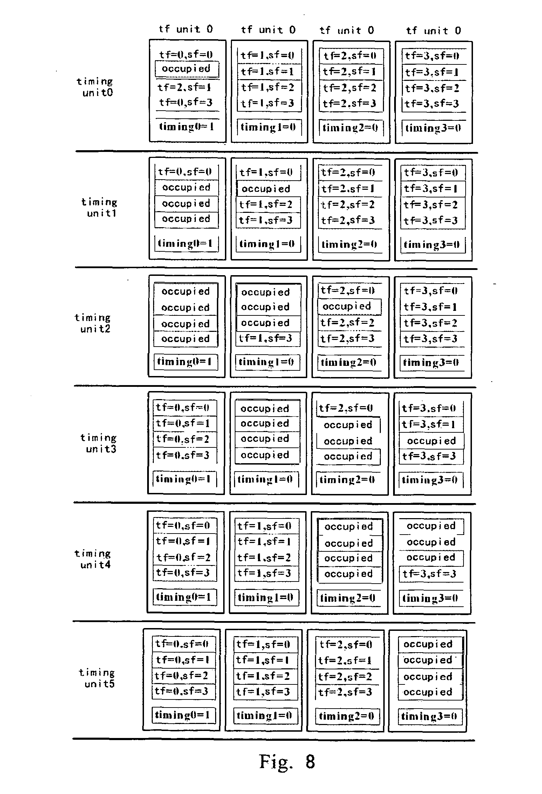

Fig. 8 is a schematic diagram showing a reorder process of the cells received by an object module according to a preferred embodiment of the present invention. In slot 2, the ts unit 0 is reordered and reads all the reordering units in the ts unit 0 in the order from sequence flag 0 to sequence flag 3 and at the same time the timing unit of the ts unit 0 is set to zero. In slot 3, the ts unit 1 is reordered and reads all the reordering units in the ts unit 1 in the order from sequence flag 0 to sequence flag 3 and at the same time the timing unit of the ts unit 1 is set to zero. In slot 4, the ts unit 2 is reordered and reads all the reordering units in the ts unit 2 in the order from sequence flag 0 to sequence flag 3 and at the same time the timing unit of the ts unit 2 is set to zero. In slot 5, the ts unit 3 is reordered and reads all the reordering units in the ts unit 3 in the order from sequence flag 0 to sequence flag 3 and at the same time the timing unit of the ts unit 3 is set to zero.

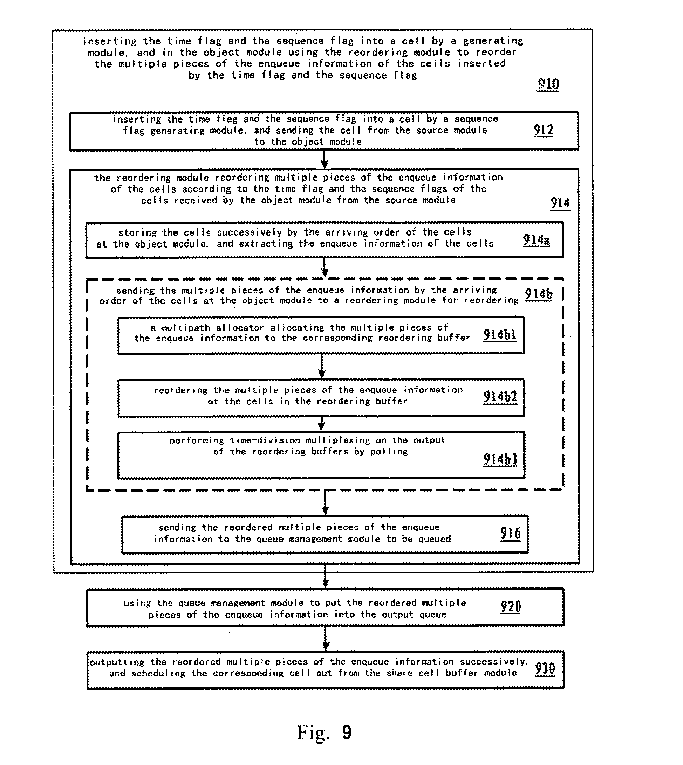

Fig. 9 is a flow chart showing a method for cell processing according to an embodiment of the present invention. The method for cell processing will be described as below:

At step 910, insert the time flag and the sequence flag into a cell by a sequence flag generating module, and in the object module use the reordering module to reorder the multiple pieces of the enqueue information of the cells inserted by the time flag and the sequence flag.

And at step 930, output the reordered multiple pieces of the enqueue information successively, and schedule the corresponding cell out from the share cell buffer module.

The method for cell processing also includes step 920 between step 910 and step 930.

At step 920, use the queue management module to put the reordered multiple pieces of the enqueue information into the output queue.

Herein, step 910 further includes the following steps:

At step 912, insert the time flag and the sequence flag into a cell by a sequence flag generating module, and send the cell from the source module to the object module. The cells of the same stream outputted at the same time will be inserted by the same time flag. The time flags are arranged by a unified rule and the number of the time flags is at least twice of the cell period included in the maximum delay difference between two different paths. Whereas, the cells, which are in the same stream and outputted at the same time, will be inserted by different sequence flags. And, the sequence flags can be arranged by a unified rule, with their number equal to number of the paths from one source module to one object module.

At step 914, the reordering module reorders multiple pieces of the enqueue information of the cells according to the time flag and the sequence flags of the cells received by the object module from the source module.

At step 916, send the reordered multiple pieces of the enqueue information to the queue management module to be queued.

Herein, the reordering module reorders the multiple pieces of the enqueue information of the cells according to the time flag and the sequence flag, and this may include the following steps:

At step 914a, the input processor module stores the cells successively into the share cell buffer module by the arriving order of the cells at the object module, and extracts the enqueue information of the cells.

At step 914b, the input processor module sends the multiple pieces of the enqueue information to the reordering module by the arriving order of the cells at the object module to a reordering module for reordering.

Herein, step 914b may further include the following steps:

At step 914b1, the multipath allocator allocates the multiple pieces of the enqueue information from the input processor module to the corresponding reordering buffer in accordance with the serial number of the source module.

At step 914b2, for each reordering buffer, in the case that one cell having a certain time flag is the unique one having such a flag, the reordering buffer starts to time the time flag, and when the timing value becomes equal to or more than the maximum time delay, the reordering buffer determines whether all of the multiple pieces of the enqueue information of the cells in a certain time range prior to that of " time flag" have been outputted, and if so, outputs the multiple pieces of the enqueue information of the cell having the time flag; if not, enforces to output the multiple pieces of the enqueue information of the cells in the prior time range that have not been outputted, and then outputs the multiple pieces of the enqueue information of the cell having the time flag.

At step 914b3, the multiplexer performs the time-division multiplexing on the multiple pieces of the enqueue information output of the reordering buffers by polling.

At step 914b2, the reordering buffer times the multiple pieces of the enqueue information by using the aging counter.

According to the present invention, the RCB spaces occupied are much less than that of the prior art, which may be around 36 × 4 × 72byte=81Kb. According to embodiments of the present invention, the cells are inserted by the time flags and the sequence flags in the source module, the multiple pieces of the enqueue information for the cells are ordered in the object module according to the time flags and the sequence flags and then the cells are enqueued and scheduled. Moreover, in embodiments of the present invention, the time for each cell occupying RCB during reorder is strictly controlled, the reorder operation will be done after the occupied time reaches the limit defined in the algorithm, and the demand for RCB buffer capacity is lowered, whereby it solves the significant problem in extensibility design of the multi-stage switch fabric with large capacity.

It should be appreciated that the descriptions are just embodiments rather than limitations to the present invention. It will be apparent to those skilled in the art that various modifications and variations can be made.

## Claims

1. A method for cell processing, comprising steps of:
receiving cells of a stream from a source module, wherein each of the cells has a time flag and a sequence flag, wherein the time flag is configured to show a time order of the cells in transmission,
**characterized in that** the sequence flag is configured to show a space order when the time flags of some of the cells are same; and wherein the time flags of the cells outputted from the source module at the same time are same, and the sequence flags of the cells outputted from the source module to different transmission paths at the same time are different, and
reordering multiple pieces of enqueue information of the cells according to the time flag and the sequence flag of each of the cells.

2. The method according to claim 1, wherein
the time flags are arranged by a unified rule and the number of the time flags is at least twice of the number of cell period included in the maximum delay difference between two different paths, and
the sequence flags are arranged by a unified rule, with the number thereof equal to the number of paths from the source module to an object module.

3. The method according to claim 1, wherein the step of reordering the multiple pieces of the enqueue information of the cells according to the time flag and the sequence flag of each of the cells further comprises steps of:
storing the cells successively by the arriving order of the cells at the object module and extracting the enqueue information of the cells; and
sending the multiple pieces of the enqueue information by the arriving order of the cells at the object module to a reordering module (206) for reordering.

4. The method according to claim 3, wherein the step of sending the multiple pieces of the enqueue information by the arriving order of the cells at the object module to the reordering module (206) for reordering further comprises steps of:
allocating the multiple pieces of the enqueue information to a corresponding reordering buffer (304) according to the serial number of the source module;
starting to time the time flag in the case that a cell having a unique time flag, wherein,
when a timing value becomes equal to or larger than the maximum time delay, determining whether all of the multiple pieces of the enqueue information of the cells in a time range prior to the time flag have been outputted, and if so, outputting the enqueue information of the cell having the time flag, if not, forcedly outputting the multiple pieces of the enqueue information of the cells which are not outputted till then, and outputting the enqueue information of the cell having the time flag; and
performing the time-division multiplexing on the output of the reordering buffers (304) by polling.

5. The method according to claim 3 or 4, wherein the step of reordering the multiple pieces of the enqueue information of the cells according to the time flag and the sequence flag of each of the cells further comprises a step of:
sending the multiple pieces of the reordered enqueue information to a queue management module (208) for queuing.

6. The method according to claim 4, wherein in the step of starting to time the time flag in the case that a cell having a unique time flag, the time flag is timed by using an aging counter.

7. The method according to claim 1, further comprising:
outputting the multiple pieces of the enqueue information reordered successively and scheduling the corresponding cells out from a share cell buffer module (204).

8. The method according to claim 7, further comprising a following step before the step of outputting the multiple pieces of the enqueue information reordered successively and scheduling the corresponding cells out from the share cell buffer module (204):
queuing the reordered multiple pieces of the enqueue information into an output sequence.

9. An apparatus for cell processing, comprising:
a reordering module (206), for receiving cells of a stream from a source module, wherein each of the cells has a time flag and a sequence flag, wherein the time flag is configured to show a time order of the cells in transmission,
**characterized in that**
the sequence flag is configured to show a space order when the time flags of some of the cells are same; and the time flags of the cells outputted from the source module at the same time are same, and the sequence flags of the cells outputted from the source module to different transmission paths at the same time are different, and
for reordering multiple pieces of enqueue information of the cells according to time flag and sequence flag of each of the cells.

10. The apparatus according to claim 9, wherein further comprising:
a share cell buffer module (204), for storing the cells received by the input processor module.

11. The apparatus according to claim 9, wherein further comprising:
an input processor module, for receiving cells from a source module, storing the cells into a share cell buffer module (204) and extracting the multiple pieces of the enqueue information of the cells, and outputting the multiple pieces of the enqueue information of the cells into the reordering module (206) by the arriving order of the cells at an object module.

12. The apparatus according to claim 9, wherein the reordering module (206) further comprises:
a queue management module, for receiving the multiple pieces of the enqueue information of the cells reordered by the reordering module (206) and queuing the multiple pieces of the enqueue information into an output sequence.

13. The apparatus according to claim 9, wherein the reordering module (206) further comprises:
a multipath allocator (302), for receiving the multiple pieces of the enqueue information of the cells from the input processor module (202) and allocating the multiple pieces of the enqueue information to the corresponding reordering buffer (304) according to the serial number of the source module;
a plurality of reordering buffers (304), for reordering the multiple pieces of the enqueue information, each corresponding to one source module; and
a multiplexer (306), for performing the time-division multiplexing on the output enqueue information of the reordering buffers (304) by polling.

14. The apparatus according to claim 13, wherein the reordering buffer (304) is configured such that in the case that a cell have a unique time flag, it starts to time the time flag, and when a timing value becomes equal to or larger than the maximum time delay, the reordering buffer (304) determines whether all of the multiple pieces of the enqueue information of the cells in a certain time range prior to that of the time flag have been outputted, and if so, outputs the enqueue information of the cell having the time flag; if not, enforces to output the multiple pieces of the enqueue information of the cells in the prior time range that have not been outputted, and then outputs the enqueue information of the cell having the time flag.

15. The apparatus according to claim 14, wherein the reordering buffer (304) is provided with an aging counter for timing the time flag.

## Patentansprüche

1. Verfahren zur Zellenverarbeitung, welches die Schritte aufweist:
Empfangen von Zellen eines Stroms von einem Quellenmodul, wobei jede der Zellen einen Zeitmerker und einen Folgenmerker hat, wobei der Zeitmerker ausgebildet ist zum Zeigen einer Zeitreihenfolge der Zellen bei der Übertragung, **dadurch gekennzeichnet, dass** der Folgenmerken ausgebildet ist zum Zeigen einer Raumfolge, wenn die Zeitmerker einiger der Zellen dieselben sind; und wobei die Zeitmerker der von dem Quellenmodul gleichzeitig ausgegebenen Zellen dieselben sind, und die Folgenmerker der von dem Quellenmodul zu verschiedenen Übertragungspfaden gleichzeitig ausgegebenen Zellen unterschiedlich sind, und
Wiederordnen mehrerer Stücke von Einreihungsinformationen der Zellen gemäß dem Zeitmerker und dem Folgenmerker von jeder der Zellen.

2. Verfahren nach Anspruch 1, bei dem
die Zeitmerker durch eine gleichförmige Regel angeordnet sind und die Anzahl der Zeitmerker zumindest das Zweifache der Anzahl von Zellenperioden, die in der maximalen Verzögerungsdifferenz zwischen zwei verschiedenen Pfaden enthalten sind, ist, und
die Folgenmerker durch eine gleichförmige Regel angeordnet sind, wobei deren Anzahl gleich der Anzahl von Pfaden von dem Quellenmodul zu einem Objektmodul ist.

3. Verfahren nach Anspruch 1, wobei
der Schritt des Wiederordnens der mehreren Stücke der Einreihungsinformationen der Zellen gemäß dem Zeitmerker und dem Folgenmerker von jeder der Zellen weiterhin die Schritte aufweist:
aufeinanderfolgendes Speichern der Zellen in der Reihenfolge des Eintreffens der Zellen an dem Objektmodul und Herausziehen der Einreihungsinformationen der Zellen; und
Senden der mehreren Stücke der Einreihungsinformationen in der Reihenfolge der Ankunft der Zellen an dem Objektmodul zu einem Wiederordnungsmodul (206) für die Wiederordnung.

4. Verfahren nach Anspruch 3, bei dem der Schritt des Sendens der mehreren Stücke der Einreihungsinformationen in der Reihenfolge der Ankunft der Zellen an dem Objektmodul zu dem Wiederordnungsmodul (206) zum Wiederordnen weiterhin die Schritte aufweist:
Zuweisen der mehreren Stücke der Einreihungsinformationen zu einem entsprechenden Wiederordnungspuffer (304) gemäß der Seriennummer des Quellenmoduls;
Starten der Zeiterfassung des Zeitmerkers in dem Fall, dass eine Zelle einen eindeutigen Zeitmerker hat, wobei,
wenn ein Zeitwert gleich der oder größer als die maximale Zeitverzögerung wird, Bestimmen, ob alle der mehreren Stücke der Einreihungsinformationen der Zellen in einem Zeitbereich vor dem Zeitmerker ausgegeben wurden, und wenn dies der Fall ist, Ausgeben der Einreihungsinformationen der Zelle mit dem Zeitmerker, wenn dies nicht der Fall ist, erzwungenes Ausgeben der mehreren Stücke der Einreihungsinformationen der Zellen, die bis dahin nicht ausgegeben wurden, und Ausgeben der Einreihungsinformationen der Zelle mit dem Zeitmerker; und
Durchführen des Zeitteilungs-Multiplexierens bei den Ausgangssignalen der Wiederordnungspuffer (304) durch zyklische Abfrage.

5. Verfahren nach Anspruch 3 oder 4, bei dem der Schritt des Wiederordnens der mehreren Stücke der Einreihungsinformationen der Zellen gemäß dem Zeitmerker und dem Folgenmerker von jeder der Zellen weiterhin einen Schritt aufweist:
Senden der mehreren Stücke der wiedergeordneten Einreihungsinformationen zu einem Warteschlangen-Verwaltungsmodul (208) für die Bildung einer Warteschlange.

6. Verfahren nach Anspruch 4, bei dem in dem Schritt des Startens zur Zeiterfassung des Zeitmerkers in dem Fall, dass eine Zelle einen eindeutigen Zeitmerker hat, die Zeiterfassung des Zeitmerkers durch Verwendung eines Alterungszählers erfolgt.

7. Verfahren nach Anspruch 1, welches weiterhin aufweist:
Ausgeben der mehreren Stücke der aufeinanderfolgend wiedergeordneten Einreihungsinformationen und planmäßiges Ordnen der entsprechenden Zellen aus einem Gemeinschaftszellen-Puffermodul (204).

8. Verfahren nach Anspruch 7, weiterhin aufweisend einen folgenden Schritt vor dem Schritt des Ausgebens der mehreren Stücke der aufeinanderfolgend wiedergeordneten Einreihungsinformationen und planmäßigen Ordnen der entsprechenden Zellen aus dem Gemeinschaftszellen-Puffermodul (204):
Bilden einer Warteschlange der wiedergeordneten mehreren Stücke der Einreihungsinformationen in eine Ausgangsfolge.

9. Vorrichtung zur Zellenverarbeitung, welche aufweist:
ein Wiederordnungsmodul (206) zum Empfangen von Zellen eines Stroms von einem Quellenmodul, wobei jede der Zellen einen Zeitmerker und einen Folgenmerker hat, wobei der Zeitmerker ausgebildet ist zum Zeigen einer Zeitreihenfolge der Zellen bei der Übertragung,
**dadurch gekennzeichnet, dass**
der Folgenmerker ausgebildet ist zum Zeigen einer Raumfolge, wenn die Zeitmerker von einigen der Zellen dieselben sind; und die Zeitmerker der von dem Quellenmodul gleichzeitig ausgegebenen Zellen dieselben sind, und die Folgenmerker der von dem Quellenmodul zu verschiedenen Übertragungspfaden gleichzeitig ausgegebenen Zellen unterschiedlich sind, und
zum Wiederordnen mehrerer Stücke von Einreihungsinformationen der Zellen gemäß dem Zeitmerker und dem Folgenmerker von jeder der Zellen.

10. Vorrichtung nach Anspruch 9, welche weiterhin aufweist:
ein Gemeinschaftszellen-Puffermodul (204) zum Speichern der von dem Eingangsprozessormodul empfangenen Zellen.

11. Vorrichtung nach Anspruch 9, welche weiterhin aufweist:
ein Eingangsprozessormodul zum Empfangen von Zellen von einem Quellenmodul, Speichern der Zellen in einem Gemeinschaftszellen-Puffermodul (204) und Herausziehen der mehreren Stücke der Einreihungsinformationen der Zellen, und Ausgeben der mehreren Stücke der Einreihungsinformationen der Zellen in das Wiederordnungsmodul (206) in der Reihenfolge der Ankunft der Zellen an einem Objektmodul.

12. Vorrichtung nach Anspruch 9, bei der das Wiederordnungsmodul (206) weiterhin aufweist:
ein Warteschlangen-Verwaltungsmodul zum Empfangen der von dem Wiederordnungsmodul (206) wiedergeordneten mehreren Stücke der Einreihungsinformationen der Zellen und zum Einreihen der mehreren Stücke der Einreihungsinformationen in eine Ausgangsfolge.

13. Vorrichtung nach Anspruch 9, bei der das Wiederordnungsmodul (206) weiterhin aufweist:
eine Mehrpfad-Zuweisungsvorrichtung (302) zum Empfangen der mehreren Stücke der Einreihungsinformationen der Zellen von dem Eingangsprozessormodul (202) und Zuweisen der mehreren Stücke der Einreihungsinformationen zu dem entsprechenden Wiederordnungspuffer (304) gemäß der Seriennummer des Quellenmoduls;
mehrere Wiederordnungspuffer (304) zum Wiederordnen der mehreren Stücke der Einreihungsinformationen, jeder entsprechend einem Quellenmodul; und
einen Multiplexer (306) zum Durchführen des Zeitteilungs-Multiplexierens bei den ausgegebenen Einreihungsinformationen der Wiederordnungspuffer (304) durch zyklische Abfrage.

14. Vorrichtung nach Anspruch 13, bei der der Wiederordnungspuffer (304) derart ausgebildet ist, dass in dem Fall, dass eine Zelle einen eindeutigen Zeitmerker hat, er die Zeiterfassung des Zeitmerkers startet, und wenn ein Zeitwert gleich der oder größer als die maximale Zeitverzögerung wird, bestimmt der Wiederordnungspuffer (304), ob alle der mehreren Stücke der Einreihungsinformationen der Zellen in einem bestimmten Zeitbereich vor dem des Zeitmerkers ausgegeben wurden, und wenn dies der Fall ist, die Einreihungsinformationen der Zelle mit dem Zeitmerker ausgibt; wenn dies nicht der Fall ist, die Ausgabe der mehreren Stücke der Einreihungsinformationen der Zellen in dem früheren Zeitbereich, die nicht ausgegeben wurden, erzwingt und dann die Einreihungsinformationen der Zelle mit dem Zeitmerker ausgibt.

15. Vorrichtung nach Anspruch 14, bei der der Wiederordnungspuffer (304) mit einem Alterungszähler zur Zeiterfassung des Zeitmerkers versehen ist.

## Revendications

1. Procédé de traitement de cellules, comprenant les étapes consistant à :
recevoir des cellules d'un flux provenant d'un module source, dans lequel chacune des cellules présente un indicateur de temps et un indicateur de séquence, dans lequel l'indicateur de temps est configuré pour présenter un ordre temporel des cellules en cours de transmission,
**caractérisé en ce que** l'indicateur de séquence est configuré pour présenter un ordre spatial lorsque les indicateurs de temps de certaines des cellules sont identiques ; et dans lequel les indicateurs de temps des cellules délivrées par le module source au même moment sont identiques, et les indicateurs de séquence des cellules délivrées par le module source à différents chemins de transmission au même moment sont différents, et
remettre en ordre de multiples fragments d'informations en file d'attente des cellules selon l'indicateur de temps et l'indicateur de séquence de chacune des cellules.

2. Procédé selon la revendication 1, dans lequel
les indicateurs de temps sont ordonnés par une règle unifiée et le nombre d'indicateurs de temps est au moins deux fois le nombre de périodes cellulaires comprises dans la différence de retard maximale entre deux chemins différents, et
les indicateurs de séquence sont ordonnés par une règle unifiée, le nombre de ces derniers étant identique au nombre de chemins du module source à un module cible.

3. Procédé selon la revendication 1, dans lequel l'étape de remise en ordre des multiples fragments d'informations en file d'attente des cellules selon l'indicateur de temps et l'indicateur de séquence de chacune des cellules comprend en outre les étapes consistant à :
mémoriser successivement les cellules dans l'ordre d'arrivée des cellules au module cible et extraire les informations en file d'attente des cellules ; et
envoyer à un module de remise en ordre (206) les multiples fragments d'informations dans l'ordre d'arrivée des cellules au module cible pour les remettre en ordre.

4. Procédé selon la revendication 3, dans lequel l'étape d'envoi des multiples fragments d'informations en file d'attente dans l'ordre d'arrivée des cellules au module cible au module de remise en ordre (206) pour une remise en ordre comprend en outre les étapes consistant à :
affecter les multiples fragments d'informations en file d'attente à un tampon de remise en ordre correspondant (304) selon le numéro de série du module source ;
commencer à synchroniser l'indicateur de temps dans le cas où une cellule a un unique indicateur de temps, dans lequel,
lorsqu'une valeur de synchronisation devient égale ou supérieure au retard maximal, on détermine si les multiples fragments d'informations en file d'attente des cellules dans une plage de temps avant l'indicateur de temps ont été toutes délivrées, et, si c'est le cas, on délivre les informations en file d'attente de la cellule ayant l'indicateur de temps, sinon on délivre à force les multiples fragments d'informations en file d'attente des cellules qui ne sont pas délivrées jusque là et on délivre les informations en file d'attente de la cellule ayant l'indicateur de temps ; et
effectuer le multiplexage par répartition dans le temps à la sortie des tampons de remise en ordre (304) par interrogation.

5. Procédé selon la revendication 3 ou 4, dans lequel l'étape de remise en ordre des multiples fragments d'informations en file d'attente des cellules selon l'indicateur de temps et l'indicateur de séquence de chacune des cellules comprend en outre une étape consistant à :
envoyer les multiples fragments d'informations en file d'attente remises en ordre à un module de gestion de file d'attente (208) pour assurer une mise en file d'attente.

6. Procédé selon la revendication 4, dans lequel, à l'étape consistant à commencer à synchroniser l'indicateur de temps dans le cas où une cellule a un unique indicateur de temps, l'indicateur de temps est synchronisé en utilisant un compteur de vieillissement.

7. Procédé selon la revendication 1, comprenant en outre l'étape consistant à :
délivrer les multiples fragments d'informations en file d'attente remises en ordre successivement et planifier les cellules correspondantes provenant d'un module tampon de cellules de partage (204).

8. Procédé selon la revendication 7, comprenant en outre une étape suivante avant l'étape de délivrance des multiples fragments d'informations en file d'attente remises en ordre successivement et de planification des cellules correspondantes provenant du module tampon de cellules de partage (204), consistant à :
mettre en file d'attente les multiples fragments d'informations en file d'attente remises en ordre dans une séquence de sortie.

9. Appareil de traitement de cellules, comprenant :
un module de remise en ordre (206) pour recevoir des cellules d'un flux provenant d'un module source, dans lequel chaque cellule présente un indicateur de temps et un indicateur de séquence, dans lequel l'indicateur de temps est configuré pour présenter un ordre temporel des cellules en cours de transmission,
**caractérisé en ce que**
l'indicateur de séquence est configuré pour présenter un ordre spatial lorsque les indicateurs de temps de certaines des cellules sont identiques ; et les indicateurs de temps des cellules délivrées par le module source au même moment sont identiques, et les indicateurs de séquence des cellules délivrées par le module source à différents chemins de transmission au même moment sont différents, et
pour remettre en ordre de multiples fragments d'informations en file d'attente des cellules selon l'indicateur de temps et l'indicateur de séquence de chacune des cellules.

10. Appareil selon la revendication 9, comprenant en outre :
un module tampon de cellules de partage (204) pour mémoriser les cellules reçues par le module de processeur d'entrée.

11. Appareil selon la revendication 9, comprenant en outre :
un module de processeur d'entrée pour recevoir des cellules d'un module source, mémoriser les cellules dans un module tampon de cellules de partage (204), extraire les multiples fragments d'informations en file d'attente des cellules et délivrer les multiples fragments d'informations en file d'attente des cellules dans le module de remise en ordre (206), dans l'ordre d'arrivée des cellules au module cible.

12. Appareil selon la revendication 9, dans lequel le module de remise en ordre (206) comprend en outre :
un module de gestion de file d'attente pour recevoir les multiples fragments d'informations en file d'attente des cellules remises en ordre par le module de remise en ordre (206) et mettre en file d'attente les multiples fragments d'informations en file d'attente dans une séquence de sortie.

13. Appareil selon la revendication 9, dans lequel le module de remise en ordre (206) comprend en outre :
un programme d'attribution de multiples trajets (302) pour recevoir les multiples fragments d'informations en file d'attente des cellules provenant du module de processeur d'entrée (202) et attribuer les multiples fragments d'informations en file d'attente au tampon de remise en ordre correspondant (304) selon le numéro de série du module source ;
une pluralité de tampons de remise en ordre (304) pour remettre en ordre les multiples fragments d'informations en file d'attente, chacun correspondant à un module source ; et
un multiplexeur (306) pour réaliser le multiplexage par répartition dans le temps sur les informations de sortie en file d'attente des tampons de remise en ordre (304) par interrogation.

14. Appareil selon la revendication 13, dans lequel le tampon de remise en ordre (304) est configuré de sorte qu'il commence à synchroniser l'indicateur de temps dans le cas où une cellule présente un unique indicateur de temps et que, lorsqu'une valeur de synchronisation devient égale ou supérieure au retard maximal, le tampon de remise en ordre (304) détermine si tous les multiples fragments d'informations en file d'attente des cellules dans une certaine plage de temps avant celle de l'indicateur de temps ont été délivrées et, si c'est le cas, qu'il délivre les informations en file d'attente de la cellule ayant l'indicateur de temps ; sinon, qu'il pousse à délivrer les multiples fragments d'informations en file d'attente des cellules dans la plage de temps précédente qui n'ont pas été délivrées, puis délivre les informations en file d'attente de la cellule ayant l'indicateur de temps.

15. Appareil selon la revendication 14, dans lequel le tampon de remise en ordre (304) est équipé d'un compteur de vieillissement pour synchroniser l'indicateur de temps.
